# EUROPÄISCHE PATENTANMELDUNG

(11) **EP 1 072 450 A2**
(43) Veröffentlichungstag der Anmeldung: **31.01.2001**
(21) Anmeldenummer: 00108599.2
(22) Anmeldetag: 20.04.2000
(51) Int. Cl.: B60G 15/06

(54) **Federbeinstützlager**

(30) Priorität: 30.07.1999 DE 19935397
(71) Anmelder: Firma Carl Freudenberg, 69469 Weinheim (DE)
(72) Erfinder: Schütz, Michael, 79418 Schliengen (DE)

(57) **Zusammenfassung**

Federbeinstützlager, umfassend ein Kopflager (1), das mit seinem Innenring (2) am stirnseitigen, dem einer Karosserie (3) zugewandten Ende einer Kolbenstange (4) eines Stoßdämpfers (5) festlegbar ist, wobei der Innenring (2) von einem Außenring (6) mit radialem Abstand umschlossen ist, wobei in dem durch den Abstand gebildeten Spalt (7) zumindest ein Federkörper (8) aus gummielastischem Werkstoff angeordnet ist, wobei der Außenring (6) ortsfest zur Karosserie (3) angeordnet ist und wobei sich nur der Kraftfluß (9) des Stoßdämpfers (5) durch den Federkörper (8) des Kopflagers (1) in die Karosserie (3) erstreckt.

## Beschreibung

### Technisches Gebiet

Die Erfindung betrifft ein Federbeinstützlager.

### Stand der Technik

Federbeinstützlager sind allgemein bekannt und bilden beispielsweise einen Teil einer Vorderradaufhängung eines Kraftfahrzeugs.

Der Federkörper eines Kopflagers, das einen Bestandteil des Federbeinstützlagers bildet, steht dabei in funktionstechnischem Zusammenhang mit dem Stoßdämpfer und der Druckfeder und einem Endanschlag. Sowohl der Kraftfluß des Stoßdämpfers als auch der Kraftfluß der Druckfeder und der Kraftfluß des Endanschlags erstrecken sich durch den Federkörper in die Karosserie des Kraftfahrzeugs.

Dabei ist allerdings zu beachten, daß das Federbeinstützlager nur ungenügend auf die jeweilige Stoßdämpfercharakteristik abstimmbar ist, da die Druckfeder und der Endanschlag ebenfalls Einfluß auf den Federkörper haben, und deshalb unerwünschte Störeinflüsse bewirken.

### Darstellung der Erfindung

Der Erfindung liegt die Aufgabe zugrunde, ein Federbeinstützlager derart weiterzuentwickeln, daß die zuvor genannten Nachteile vermieden werden und für gute Gebrauchseigenschaften des Federbeinstützlagers nur die Stoßdämpfercharakteristik und die Eigenschaften des Federkörpers aufeinander abzustimmen sind.

Diese Aufgabe wird erfindungsgemäß durch die Merkmale von Anspruch 1 gelöst. Auf vorteilhafte Ausgestaltungen nehmen die Unteransprüche Bezug.

Zur Lösung der Aufgabe ist ein Federbeinstützlager vorgesehen, umfassend ein Kopflager, das mit seinem Innenring am stirnseitigen, dem einer Karosserie zugwandten Ende der Kolbenstange eines Stoßdämpfers festlegbar ist, wobei der Innenring von einem Außenring mit radialem Abstand umschlossen ist, wobei in dem durch den Abstand gebildeten Spalt zumindest ein Federkörper aus gummielastischem Werkstoff angeordnet ist, wobei der Außenring ortsfest zur Karosserie angeordnet ist und wobei sich nur der Kraftfluß des Stoßdämpfers durch den Federkörper des Kopflagers in die Karosserie erstreckt. Die funktionstechnische Entkoppelung der Druckfeder des Federbeins und/oder des Endanschlags vom Federkörper des Kopflagers ist hierbei von hervorzuhebendem Vorteil. Dadurch, daß die Druckfeder und der Endanschlag während der bestimmungsgemäßen Verwendung des Federbeinstützlagers keinen Einfluß auf den Federkörper haben, ist dieser besonders einfach und präzise mit der Charakteristik des Stoßdämpfers abzustimmen.

Der Kraftfluß der Druckfeder und/oder der Kraftfluß des Endanschlags erstrecken sich jeweils über andere Bauteile als den Federkörper in die Karosserie.

Der Außenring kann ortsfest in einem im wesentlichen topfförmigen Flansch angeordnet sein, wobei der Flansch und die Karosserie ortsfest verbunden sind. Im Hinblick auf eine einfache Herstellung von verschiedenen Federbeinstützlager für verschiedene Anwendungsfälle ist eine solche Ausgestaltung von Vorteil. Durch verschiedenartig gestaltete Flansche besteht die Möglichkeit, Federbeinstützlager an die jeweilige Einbausituation anzupassen.

Der Flansch kann radial außenseitig von einem Axialwälzlager umschlossen sein, das mit seiner der Karosserie zugwandten ersten Lagerschale drehfest mit dem Flansch und mit seiner dem Stoßdämpfer zugwandten zweiten Lagerschale drehfest mit einem Federteller verbunden ist, wobei am Federteller die Druckfeder des Federbeins abstützbar ist. Dadurch, daß das Axialwälzlager den Flansch radial außenseitig umschließt, weist dieses einen vergleichsweise großen Durchmesser auf und ist dadurch vergleichsweise gering belastet. Einfacher ausgeführte, kostengünstigere Lager können daher zur Anwendung gelangen. Das Axialwälzlager ist erforderlich, um eine möglichst reibungsarme Relativverdrehung des Federtellers beim Einfedern der Druckfeder bezogen auf die Karosserie oder den ortsfest damit verbundenen Flansch zuzulassen.

Zumindest die zweite Lagerschale kann aus einem polymeren Werkstoff bestehen. Alternativ oder zusätzlich besteht die Möglichkeit, daß die zweite Lagerschale und der Federteller mittels einer schwingungsdämpfenden Zwischenschicht aufeinander abgestützt sind. Die schwingungsdämpfende Zwischenschicht kann beispielsweise folienartig dünn ausgebildet sein und aus einem gummielastischem Werkstoff bestehen. Hierbei ist von Vorteil, daß akustisch störende Schwingungen des Federbeinstützlagers auf ein Minimum reduziert sind und beispielsweise im Innenraum des Kraftfahrzeugs nicht als störend empfunden werden.

Der Mittelpunkt der Wälzkörper und der Mittelpunkt der stirnseitig letzten Federwindung können im wesentlichen in einer gedachten Radialebene angeordnet sein. Durch eine solche Ausgestaltung kann eine Druckfeder mit vergleichsweise sehr großer Federlänge eingesetzt werden. Im Vergleich zu Ausführungen von Federbeinstützlager, bei denen die stirnseitig letzte Federwindung deutlich weiter in Richtung Stoßdämpfer verlagert und dem Kopflager mit großem axialem Abstand benachbart zugeordnet ist, wird durch die zuvor beschriebene Ausgestaltung ein deutlich höherer Komfort erreicht. Dies wird dadurch erzielt, daß das Kopflager relativ klein ausgeführt ist und das Axialwälzlager dadurch außenumfangsseitig um das Kopflager angeordnet werden kann.

Ein Endanschlag, der die Kolbenstange auf der der Karosserie zugwandten Seite konzentrisch umschließt, kann vorgesehen sein, um den Stoßdämpfer bei extremen Einfederbewegungen nicht zu beschädigen und/oder Anschlaggeräusche zu reduzieren. Auf der dem Stoßdämpfer zugewandten Seite des Flanschs kann eine axial entgegen dem Flansch offene, topfförmige Aufnahme für einen in Bewegungsrichtung des Stoßdämpfers elastisch nachgiebigen Endanschlag angeordnet sein, wobei die Aufnahme und der Flansch durch ihre jeweils einander zugwandten Böden aufeinander abgestützt sind. Einer solchen Ausgestaltung wird im Rahmen der vorliegenden Erfindung der Vorzug gegeben. Insbesondere dann, wenn sowohl der Flansch als auch die Aufnahme aus einem metallischen, beispielsweise tiefgezogenen Werkstoff bestehen, kann es vorgesehen sein, daß zwischen den Böden zur Schwingungsentkoppelung eine folienartig dünne, schwingungsdämpfend Zwischenschicht angeordnet ist.

Nach einer anderen Ausgestaltung besteht die Möglichkeit, daß auf der dem Stoßdämpfer zugwandten Seite des Flanschs eine Aufnahme für eine in Bewegungsrichtung des Stoßdämpfers elastisch nachgiebigen Endanschlag angeordnet ist, wobei die Aufnahme in axialer Richtung an der zweiten Lagerschale abgestützt ist. Bei dieser Ausgestaltung ist von Vorteil, daß der Endanschlag permanent in Berührung zwischen dem sich am Kopflager abstützenden Flansch und dem Stoßdämpfer ist. Somit wird die Einfederungskennlinie vom Endanschlag und seinen Gebrauchseigenschaften bestimmt. Es wird vermieden, das eine stoßartige Berührung zustande kommt.

Nachteilig ist demgegenüber, daß der Kraftfluß sowohl der Druckfeder als auch des Endanschlags über das Wälzlager in die Karosserie eingeleitet werden. Die Belastung auf das Lager ist demnach größer als bei der zuvor beschriebenen, bevorzugten Ausgestaltung, bei der nicht nur eine doppelte (1. Kraftfluß des Stoßdämpfers über den Federkörper, 2. Kraftfluß der Feder und des Endanschlags über das Axialwälzlager in die Karosserie) sondern, eine dreifach Entkopplung, nämlich Einleitung der Stoßdämpferkräfte über den Federkörper in die Karosserie, Einleitung der Kräfte des Endanschlags durch die Aufnahme und den Flansch in die Karosserie und Einleitung der Kräfte der Druckfeder über den Federteller und das Wälzlager in die Karosserie erfolgt.

Im Hinblick auf einen möglichst einfachen, teilearmen Aufbau des Federbeinstützlagers kann es vorgesehen sein, daß die Aufnahme und der Federteller einstückig und materialeinheitlich ausgebildet sind.

Der Innenring kann auf jeder seinen Stirnseiten zumindest einen elastisch nachgiebigen Anschlagpuffer zur Begrenzung extremer Auslenkbewegungen in Bewegungsrichtung des Stoßdämpfers aufweisen, wobei der axial in Richtung des Stoßdämpfers angeordnete Anschlagpuffer mit dem Boden des Flanschs und der axial entgegengesetzt angeordnete Anschlagpuffer mit der Karosserie in Berührung bringbar ist. Zur Karosserie zählen in diesem Fall auch Teile, die ortsfest mit der Karosserie verbunden sind, also beispielsweise mit der Karosserie verschraubte oder verschweißte Bleche. Die Anschlagpuffer berühren ihre Gegenanschlagflächen immer dann, wenn tieffrequente, großamplitudige Schwingungen beispielsweise beim Überfahren von Bordsteinkanten durch das Rad in den Stoßdämpfer eingeleitet werden. Der Endanschlag hat eine sehr weich anlaufende Kraft-Weg-Kennlinie, die in Ihrem Verlauf sehr stark progressiv wird. Erst bei extremen Stößen kommen die Anschläge des Kopflagers zum Einsatz. Das ist darin begründet, daß das eingefederte Rad so schnell wie möglich wieder in Kontakt zur Fahrbahn gebracht werden soll. Nur ein im Kontakt zur Fahrbahn stehendes Rad bringt die notwendige Fahrsicherheit.

Eine einfache und kostengünstige Herstellbarkeit des Kopflagers kann dadurch erreicht werden, daß die Anschlagpuffer und der Federkörper einstückig und materialeinheitlich ausgebildet sind. Die Anschlagpuffer und der Federkörper werden in einem gemeinsamen Arbeitsgang in eine Werkzeugkavität eingespritzt, in die bereits der Innenring und der Außenring des Kopflagers eingelegt sind. Im Anschluß an die Einspritzung des gummielastischen Werkstoffs verfestigt sich dieser allmählich und verkrallt sich unlösbar mit den Oberflächen von Innen- und Außenring.

Nach einer anderen Ausgestaltung besteht die Möglichkeit, daß die Anschlagpuffer separat erzeugt und mit der jeweiligen Stirnseite des Innenrings kraft- und/oder formschlüssig verbunden sind. Hierbei ist von Vorteil, daß die Anschlagpuffer - unabhängig vom Material, aus dem der Federkörper besteht - besonders gut an die jeweiligen Gegebenheiten des Anwendungsfalles angepaßt werden können. Die Anschlagpuffer können beispielsweise auf die Stirnseiten des Innenrings aufgeklebt oder in hinterschnittene, beispielsweise schwalbenschwanzförmige Ausnehmungen des Innenrings einschnappbar sein.

Eine vergleichsweise haltbarere, formschlüssige Verbindung kann dadurch erzielt werden, daß der Innenring zumindest eine sich im wesentlichen in axialer Richtung von Stirnseite zu Stirnseite erstreckende Durchbrechung aufweist und daß die Durchbrechung vom Werkstoff der Anschlagpuffer durchdrungen ist. Eine solche Ausgestaltung ist nur dann sinnvoll, wenn der gummielastische Werkstoff in eine Werkzeugkavität eingespritzt und anschließend zwischen Innenring und Außenring vulkanisiert wird.

Besonders vorteilhafte Gebrauchseigenschaften weisen Anschlagpuffer auf, die aus einem Zell-Polyurethan bestehen. Im Vergleich zu anderen Werkstoffen hat Zell-Polyurethan den Vorteil, daß die Werkstoffdämpfung mit Amplitudenzunahme relativ ansteigt und die dynamische Verhärtung im Vergleich zu elastomeren Werkstoffen allgemein nicht so hoch ist.

Die Anschlagpuffer können auf jeder Seite des Innenrings durch jeweils zumindest drei gleichmäßig in Umfangsrichtung verteilt angeordnete Anschlagnocken gebildet sein. Die Form der Anschlagnocken ist bevorzugt so ausgeführt, daß sich mit zunehmendem Einfederweg eine progressiv ansteigende Federkraft ergibt. Dadurch ist sichergestellt, daß die Anschlagpuffer die Gegenanschlagfläche zunächst weich berühren, beispielsweise um ein Rütteln und starke Geräusche zu vermeiden und sich erst mit zunehmendem Einfederweg eine stärkere Abstützung der beiden Teil aneinander ergibt.

### Kurzbeschreibung der Zeichnung

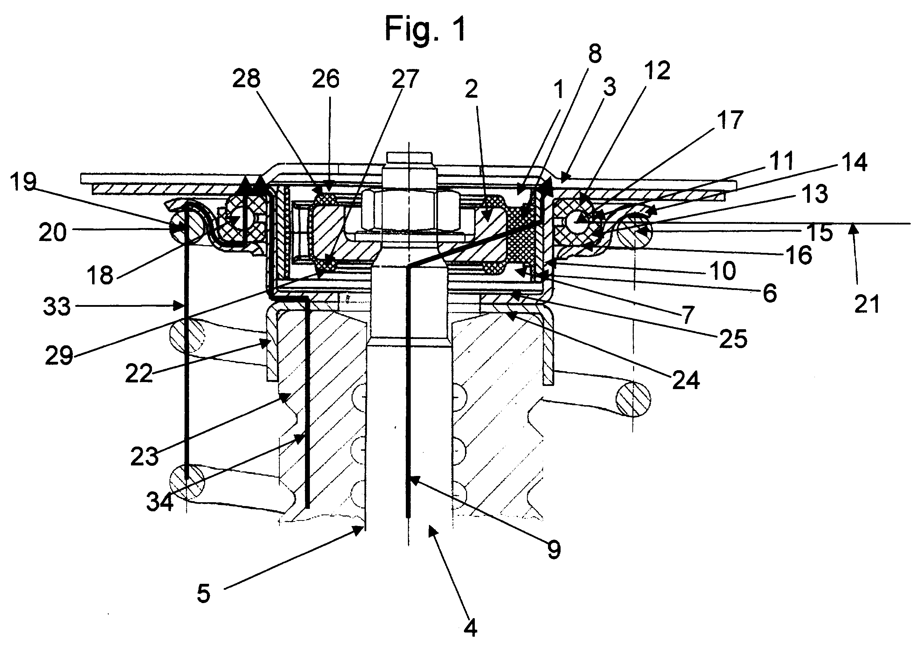

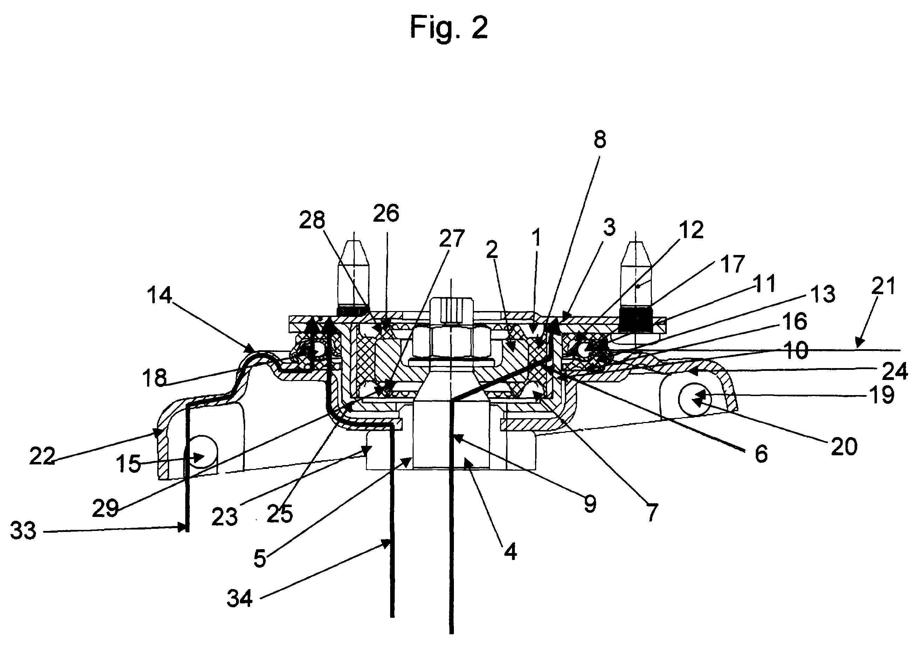

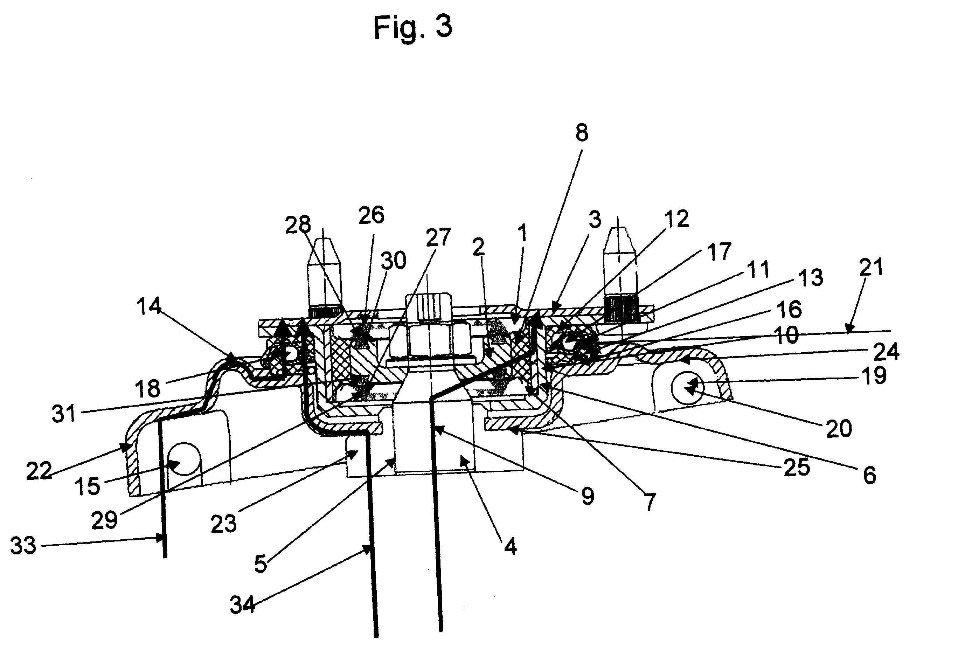

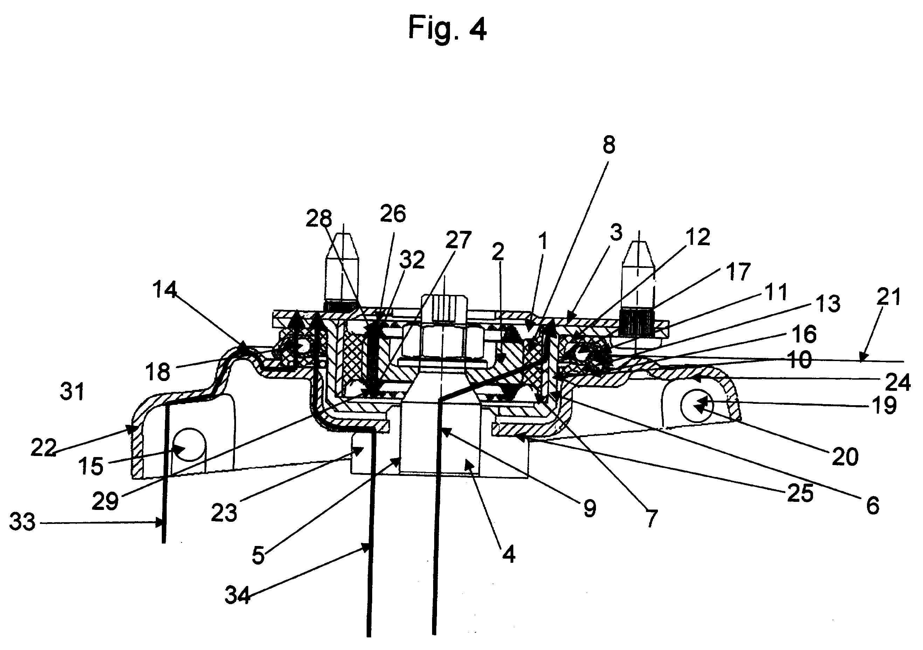

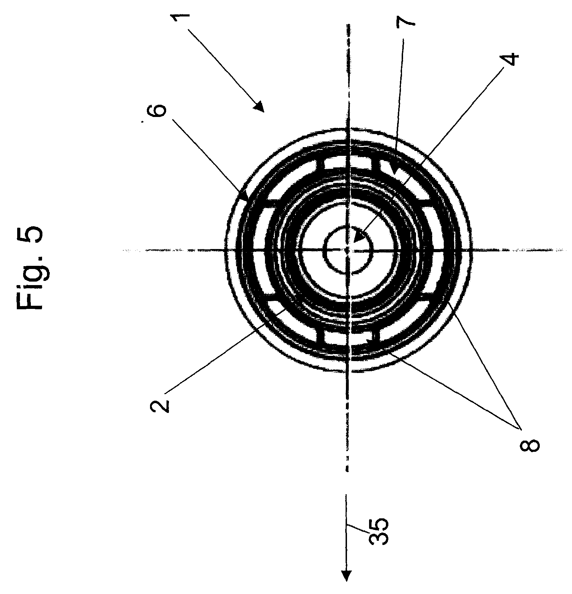

Zwei Ausführungsbeispiele eines erfindungsgemäßen Federbeinstützlagers werden nachfolgend anhand der Figuren 1 und 2 näher beschrieben. In den Figuren 3 und 4 sind zusätzlich verschieden ausgestaltete Anschlagpuffer gezeigt, die alternativ in den Ausführungsbeispielen Figur 1 oder Figur 2 zur Anwendung gelangen können. Figur 5 zeigt einen schematischen Schnitt durch den Federkörper des Kopflagers wobei der Federkörper aus mehreren Teil-Federkörpern besteht.

### Ausführung der Erfindung

In den Figuren 1 und 2 ist jeweils ein Ausführungsbeispiel eines Federbeinstützlagers gezeigt. Beide Federbeinstützlager haben ein Kopflager 1, das aus einem Innenring 2 und einem den Innenring 2 mit radialem Abstand umschließenden Außenring 6 besteht, wobei der Innenring 2 und der Außenring 6 durch den Federkörper 8, der innerhalb des Spalts 7 angeordnet ist, verbunden sind. Der Federkörper 8 ist in den hier gezeigten Ausführungsbeispielen in Umfangsrichtung mehrteilig ausgebildet, um unterschiedlichen Anforderungen in verschiedenen Belastungsrichtungen gerecht zu werden.

In diesen Ausführungsbeispielen ist es vorgesehen, daß in axialer Richtung zwischen der zweiten Lagerschale 13 und dem Federteller 14 eine Zwischenschicht 16 angeordnet ist, die aus einem schwingungsdämpfenden Werkstoff besteht. Auch die Böden 24, 25 der Aufnahme 22 und des Flanschs 10 aus Figur 1 können durch eine solche Zwischenschicht aufeinander abgestützt sein.

Die Anschlagpuffer 28, 29, die auf den Stirnseiten 26, 27 des Innenrings 2 angeordnet sind, sind in diesen Ausführungsbeispielen einstückig ineinander übergehend mit dem Federkörper 8 ausgeführt. Eine davon abweichende Ausgestaltung, die hier ebenfalls zur Anwendung gelangen kann, ist jeweils in den Figuren 3 und 4 gezeigt.

In diesen Ausführungsbeispielen sind vier in Umfangsrichtung verteilte Teil-Federkörper vorgesehen, wobei alle Federkörper bei Bewegung des mit der Kolbenstange 4 verbundenen Innenrings 2 in axialer Richtung auf Schub belastet werden. Die anderen Belastungsrichtungen werden zu Figur 5 beschrieben.

Der Außenring 6 ist in einen topfförmigen Flansch 10 eingepreßt, der unbeweglich mit der Karosserie 3, beispielsweise durch eine Verschraubung oder eine Verschweißung verbunden ist.

Entscheidend ist, daß sich nur der Kraftfluß 9 des Stoßdämpfers 5 durch den Federkörper 8 des Kopflagers 1 in die Karosserie 3 erstreckt. Der Federkörper 8 steht in keinem funktionstechnischen Zusammenhang mit der Druckfeder 15 und/oder dem Endanschlag 23.

Figur 1 zeigt ein besonders bevorzugtes Ausführungsbeispiel. Das hier gezeigte Federbeinstützlager weist eine dreifach Entkopplung auf, derart, daß der Stoßdämpfer 5, die Druckfeder 15 und/oder der Endanschlag 23 keine unerwünschten Einflüsse aufeinander haben. Der Kraftfluß 9 des Stoßdämpfers 5 erstreckt sich durch den Federkörper 8 des Kopflagers 1 in die Karosserie 3. Der Kraftfluß 33 der Druckfeder 15 erstreckt sich über den Federteller 14 und das Axialwälzlager 11 in die Karosserie 3. Der Kraftfluß 34 des Endanschlags 23 erstreckt sich demgegenüber durch die Aufnahme 22 und den Flansch 10 in die Karosserie 3.

Durch diese vorteilhafte Ausgestaltung besteht die Möglichkeit, den Federkörper 8 besonders genau auf die Charakteristik des Stoßdämpfers 5 abstimmen zu können. Die gewünschten unterschiedlichen Federsteifigkeiten können speziell auf den Stoßdämpfer eingestellt werden. Die gewünschte, sehr weiche Abstimmung in Einfederichtung sowie die Federauslegungen in Fahrtrichtung sowie quer zur Fahrtrichtung werden von störenden Einflüssen befreit. Alle zusätzlichen störenden Einflüsse/Kräfte werden nun separat abgeleitet.

In diesem Ausführungsbeispiel sind der Mittelpunkt der Wälzkörper 18 und der Mittelpunkt der stirnseitig letzten Federwindung 20 im wesentlichen in einer gedachten Radialebene 11 angeordnet. Außerdem liegt auch das Kopflager 1 im wesentlichen in dieser Radialebene 21. Bei einer solchen Ausführungsform ist von Vorteil, daß die Druckfeder 15 eine besonders große Federlänge aufweist, wodurch der Komfort deutlich gesteigert wird.

In Figur 2 ist ein Ausführungsbeispiet des Federbeinstützlagers gezeigt, daß sich im wesentlichen vom Ausführungsbeispiel Figur 1 dadurch unterscheidet, daß sich sowohl der Kraftfluß 33 der Druckfeder 15 als auch der Kraftfluß 34 des Endanschlags 23 durch das Wälzlager 11 in die Karosserie 3 erstrecken.

Bezüglich der funktionstechnischen Entkopplung vom Federkörper 8 weist das hier gezeigte Ausführungsbeispiel die selben vorteilhaften Gebrauchseigenschaften wie das Ausführungsbeispiel aus Figur 1 auf.

Dem Nachteil, daß sowohl der Kraftfluß 33 der Druckfeder 15 als auch der Kraftfluß 34 des Endanschlags 23 jeweils durch das Wälzlager 11 geleitet werden, steht ein vergleichsweise teilearmer, einfacher Aufbau als Vorteil gegenüber. Die Aufnahme 22 und der Federteller 14 sind einstückig und materialeinheitlich ausgebildet.

In diesem Ausführungsbeispiel sind die Anschlagpuffer 28, 29, die auf den Stirnseiten 26, 27 des Innenrings 2 angeordnet sind, als Anschlagnocken ausgebildet, wobei die Anschlagnocken gleichmäßig in Umfangsrichtung verteilt angeordnet und einstückig ineinander übergehend mit dem Federkörper 8 ausgeführt sind.

In den Figuren 3 und 4 ist jeweils ein Ausschnitt aus dem Kopflager 1 aus den Figuren 1 oder 2 gezeigt, wobei sich die Festlegung der Anschlagpuffer 28, 29 am Innenring 2 von den zuvor beschriebenen Ausführungsbeispielen unterscheidet.

In Figur 3 sind die Anschlagpuffer 28, 29 separat erzeugt und mit der jeweiligen Stirnseite 26, 27 des Innenrings 2 formschlüssig verbunden. Zusätzlich oder alternativ besteht die Möglichkeit, einen Kraftschluß, beispielsweise durch eine Verklebung, vorzusehen.

In diesem Ausführungsbeispiel sind die Anschlagpuffer 28, 29 in hinterschnittene Ausnehmungen 30, 31 der jeweiligen Stirnseiten 26, 27 des Innenrings 2 eingeschnappt, wobei die Ausnehmungen 30, 31 jeweils schwalbenschwanzförmig ausgebildet sind.

In Figur 4 weist der Innenring 2 mehrere in Umfangsrichtung verteilte, sich im wesentlichen in axialer Richtung von Stirnseite 26 zu Stirnseite 27 erstreckende Durchbrechungen 32 auf, wobei die Durchbrechungen 32 vom elastomerem Werkstoff der Anschlagpuffer 28, 29 durchdrungen sind. Dadurch wird eine besonders gute Haltbarkeit erreicht.

Die separat ausgebildeten Anschlagpuffer 28, 29 bestehen bevorzugt aus einem Zell-Polyurethan.

In Figur 5 ist eine schematische Darstellung des mehrteiligen Federkörpers 8 gezeigt, der in diesem Ausführungsbeispiel aus vier Teil-Federkörpern besteht. Die Teil-Federkörper verbinden den Außenumfang des Innenrings 2 mit dem Innenumfang des Außenrings 6, wobei in Figur 5 eine Draufsicht auf das Kopflager 1 aus den Figuren 1 und 2 gezeigt ist. In Fahrtrichtung 35 sind die Teil-Federkörper nur vergleichsweise dünn ausgebildet, um eine möglichst große Nachgiebigkeit in dieser Richtung zu erreichen und beim Überfahren von Hindernissen, wie z. B. Bordsteinen, ein relativ komfortables Einfeder-Verhalten zu bekommen, ohne daß sich die Stöße extrem auf die Insassen des Fahrzeugs auswirken.

Quer zur Fahrtrichtung 35 sind die Teil-Federkörper deutlich stärker ausgelegt, um eine große Steifigkeit in diese Richtung zu erzielen. Dies ist deshalb notwendig, um eine relativ genaue Radführung zu erreichen und um großen Querkräften entgegen zu wirken.

## Patentansprüche

1. Federbeinstützlager, umfassend ein Kopflager (1), das mit seinem Innenring (2) am stirnseitigen, dem einer Karosserie (3) zugewandten Ende einer Kolbenstange (4) eines Stoßdämpfers (5) festlegbar ist, wobei der Innenring (2) von einem Außenring (6) mit radialem Abstand umschlossen ist, wobei in dem durch den Abstand gebildeten Spalt (7) zumindest ein Federkörper (8) aus gummielastischem Werkstoff angeordnet ist, wobei der Außenring (6) ortsfest zur Karosserie (3) angeordnet ist und wobei sich nur der Kraftfluß (9) des Stoßdämpfers (5) sich durch den Federkörper (8) des Kopflagers (1) in die Karosserie (3) erstreckt.

2. Federbeinstützlager nach Anspruch 1, dadurch gekennzeichnet, daß der Außenring (6) ortsfest in einem im wesentlichen topfförmigen Flansch (10) angeordnet ist und daß der Flansch (10) und die Karosserie (3) ortsfest verbunden sind.

3. Federbeinstützlager nach einem der Ansprüche 1 oder 2, dadurch gekennzeichnet, daß der Flansch (10) radial außenseitig von einem Axialwälzlager (11) umschlossen ist, das mit seiner, der Karosserie zugewandten ersten Lagerschale (12) drehfest mit dem Flansch (10) und mit seiner, dem Stoßdämpfer (5) zugwandten zweiten Lagerschale (13) drehfest mit einem Federteller (14) verbunden ist und daß am Federteller (14) die Druckfeder (15) des Federbeins abstützbar ist.

4. Federbeinstützlager nach einem der Ansprüche 1 bis 3, dadurch gekennzeichnet, daß zumindest die zweite Lagerschale (13) aus einem polymeren Werkstoff besteht.

5. Federbeinstützlager nach einem der Ansprüche 1 bis 4, dadurch gekennzeichnet, daß die zweite Lagerschale (13) und der Federteller (14) mittels einer schwingungsdämpfenden Zwischenschicht (16) aufeinander abgestützt sind.

6. Federbeinstützlager nach einem der Ansprüche 1 bis 5, dadurch gekennzeichnet, daß der Mittelpunkt (17) der Wälzkörper (18) und der Mittelpunkt (19) der stirnseitig letzten Federwindung (20) im wesentlichen in einer gedachten Radialebene (21) angeordnet sind.

7. Federbeinstützlager nach einem der Ansprüche 1 bis 6, dadurch gekennzeichnet, daß auf der dem Stoßdämpfer (5) zugwandten Seite des Flanschs (10) eine axial entgegen dem Flansch (10) offene, topfförmige Aufnahme (22) für einen in Bewegungsrichtung des Stoßdämpfers (5) elastisch nachgiebigen Endanschlag (23) angeordnet ist und daß die Ausnehmung (22) und der Flansch (10) durch ihre jeweils einander zugwandten Böden (24, 25) aufeinander abgestützt sind.

8. Federbeinstützlager nach einem der Ansprüche 1 bis 6, dadurch gekennzeichnet, daß auf der dem Stoßdämpfer (5) zugwandte Seite des Flanschs (10) eine Aufnahme (22) für einen in Bewegungsrichtung des Stoßdämpfers (5) elastisch nachgiebigen Endanschlag (23) angeordnet ist und daß die Aufnahme (22) in axialer Richtung an der zweiten Lagerschale (13) abgestützt ist.

9. Federbein nach einem der Ansprüche 1 bis 8, dadurch gekennzeichnet, daß die Aufnahme (22) und der Federteller (14) einstückig und materialeinheitlich ausgebildet sind.

10. Federbeinstützlager nach einem der Ansprüche 1 bis 9, dadurch gekennzeichnet, daß der Innenring (2) auf jeder seiner beiden Stirnseiten (26, 27) zumindest einen elastisch nachgiebigen Anschlagpuffer (28, 29) zur Begrenzung extremer Auslenkbewegungen in Bewegungsrichtung des Stoßdämpfers (5) aufweist und daß der axial in Richtung des Stoßdämpfers (5) angeordnete Anschlagpuffer (27) mit dem Boden (25) des Flanschs (10) und der axial entgegengesetzt angeordnete Anschlagpuffer (26) mit der Karosserie (3) in Berührung bringbar ist.

11. Federbeinstützlager nach einem der Ansprüche 1 bis 10, dadurch gekennzeichnet, daß die Anschlagpuffer (28, 29) und der Federkörper (8) einstückig und materialeinheitlich ausgebildet sind.

12. Federbeinstützlager nach einem der Ansprüche 1 bis 10, dadurch gekennzeichnet, daß die Anschlagpuffer (28, 29) separat erzeugt und mit der jeweiligen Stirnseite (26, 27) des Innenrings (2) kraft- und/oder formschlüssig verbunden sind.

13. Federbeinstützlager nach Anspruch 12, dadurch gekennzeichnet, daß die Anschlagpuffer (28, 29) in hinterschnittene Ausnehmungen (30, 31) in den jeweiligen Stirnseiten (26, 27) des Innenrings (2) eingeschnappt sind.

14. Federbeinstützlager nach einem der Ansprüche 12 oder 13, dadurch gekennzeichnet, daß der Innenring (2) zumindest eine sich im wesentlichen in axialer Richtung von Stirnseite (26) zu Stirnseite (27) erstreckende Durchbrechung (32) aufweist und daß die Durchbrechung (32) vom Werkstoff der Anschlagpuffer (28, 29) durchdrungen ist.

15. Federbeinstützlager nach einem der Ansprüche 10 bis 14, dadurch gekennzeichnet, daß die Anschlagpuffer (28, 29) aus Zell-Polyurethan bestehen.

16. Federbeinstützlager nach einem der Ansprüche 10 bis 15, dadurch gekennzeichnet, daß die Anschlagpuffer (28, 29) auf jeder Stirnseite (26, 27) des Innenrings (2) durch jeweils zumindest drei gleichmäßig in Umfangsrichtung verteilt angeordnete Anschlagnocken gebildet sind.
